# EUROPEAN PATENT APPLICATION

(11) **EP 0 906 841 A2**
(43) Date of publication of application: **07.04.1999**
(21) Application number: 98308048.2
(22) Date of filing: 02.10.1998
(51) Int. Cl.: B60J 7/08

(54) **Improvements relating to the covering of containers on vehicles**

(30) Priority: 03.10.1997 GB 9720908
(71) Applicant: PDE Geesink Limited, Llantrisant, Pontyclun CF72 8XZ (GB)
(72) Inventor: Collins, Anthony O., Leominster, Herefordshire HR6 OBA (GB)
(74) Representative: James, Michael John Gwynne

(57) **Abstract**

The free end 6 of a telescopic arm 4 has a cover support 8 attached thereto. This support provides a mounting for a roller 9 on which is wound a cover sheet 10. The outer end of the sheet 10 is attached at 11 to the upper end of a gantry 3. As the telescopic arm 4 is extended, the cover 10 is unwound from a roller 9 and thus extends over the top of a container mounted on a vehicle trailer.

## Description

It is environmentally advantageous to provide that open topped containers or skips are covered during transportation so that the contents of the container are protected. For large containers the manipulation of a cover over the container by hand would be impractical and some mechanical means for achieving this is needed.

In accordance with the present invention there is provided apparatus for drawing a cover over a container and comprising a gantry supporting a telescopic arm which lies centrally from end to end of the cover in its extended state, a cover support mounted centrally to the free end of the telescopic arm, to the mounting of the telescopic arm to the gantry, or to a movable cable running along the telescopic arm, a cover wound on to a roller and carried by the cover support, and means for enabling the telescopic arm to be extended so that the cover is unwound from the roller.

Such an arrangement allows for the cover to be rolled and unrolled over a container by motorised apparatus which operates the telescopic arm. Ideally the telescopic arm will be capable of being raised and lowered about a pivot point on to the gantry, so that the container can be loaded on to a platform on a vehicle (to which the gantry is attached) without the telescopic arm interfering with any loading, unloading or tipping operation. The telescopic arm can then be lowered and extended so that the canvas covers the container.

In one arrangement a free end of the cover will be secured to the gantry end of the telescopic arm. It will then extend back to the free end of the telescopic arm carrying the cover support, where the rest of the cover is wound on to the roller (when the telescopic arm is in the contracted state). Alternatively the free end of the cover could be interconnected with the free end of the telescopic arm, with the cover support being mounted adjacent to the gantry.

These arrangements do though create a "sail" of part of the cover material when the telescopic arm is retracted. Ideally therefore one end of the cover extending from the roller will be attached to movement means which will act to draw that end of the cover towards the gantry as the free end of the telescopic arm carrying the cover support is extended to move the cover support in the direction away from the gantry. Alternatively (and preferably) the structure could be such that the cover support is attached to movement means which will act to draw the cover support towards the gantry as the free end of the telescopic arm, to which the free end of the cover is attached, is extended to move in a direction away from the gantry. Then, when the telescopic arm is extended, the cover will move in two opposite directions, from a central point over the container, to a condition where the cover extends over the whole of the top surface of the container. The movement means ideally comprises a mounting arm which is carried by a cable arranged to be drawn around a pulley by part of the telescopic arm, as the telescopic arm is extended. As the telescopic arm is retracted the cable will be pulled in the opposite direction so as to draw the free end of the cover and the cover support back towards the central position over the container. When the telescopic arm is fully retracted the cover will be substantially fully wound on to the roller so that there is little or no exposed "sail".

The various arrangements of the invention have the great advantage that the cover (and any associated mounting equipment) can be kept within the width limits of the container width. Furthermore the mounting equipment can be attached as a retrofit relatively easily to an existing vehicle by welding or bolting the gantry onto a vehicle body.

The invention may be performed in various ways and a preferred embodiments thereof will now be described with reference to the accompanying drawings in which:-
Figures 1 to 4 illustrate a vehicle incorporating a covering apparatus of this invention;
Figures 5 and 6 are perspective and plan views respectively of the covering apparatus in a partially extended state;
Figure 7 illustrates a detail at one end of the covering apparatus; and
Figures 8 and 9 illustrate an alternative form of covering apparatus of this invention in two alternative states.

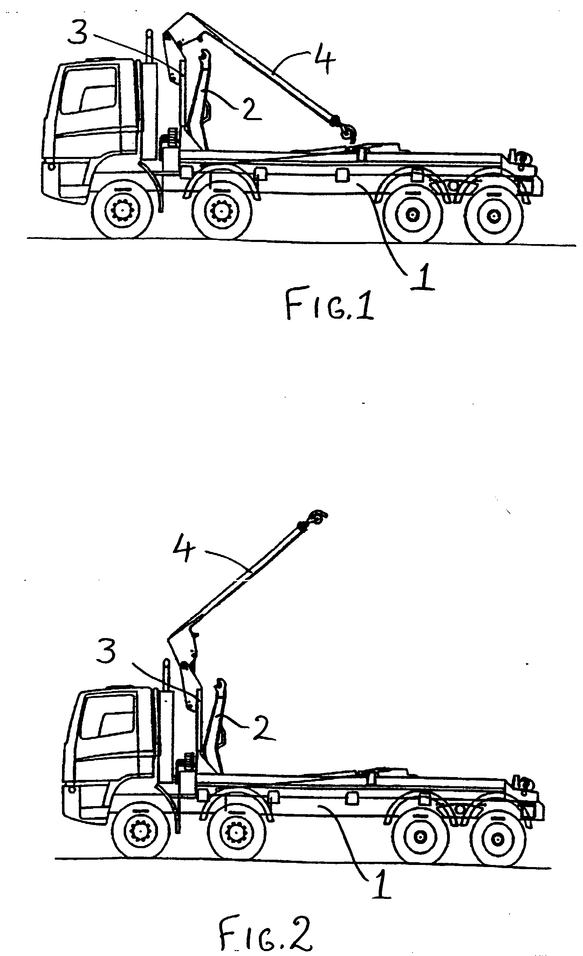

Figures 1 and 2 show a vehicle 1, on to which will be loaded a container by means of a loading arm arrangement 2. At the inboard end of the vehicle 1 there is provided a gantry 3 on which is pivotally mounted a telescopic arm 4. The height of location of the arm 4 to the gantry 3 will be kept to a minimum to keep the assembly within height restrictions. This arm can be raised from a rest position (where it can be parked into a locking mechanism) as shown in Figure 1 to a raised condition as shown in Figure 2 where it will be out of the way as a container is loaded on to the vehicle 1, or tipped during unloading. The operating mechanism for the parts 2 and 4 could be operable from the cab of the vehicle or from a control unit on the trailer part of the vehicle 1.

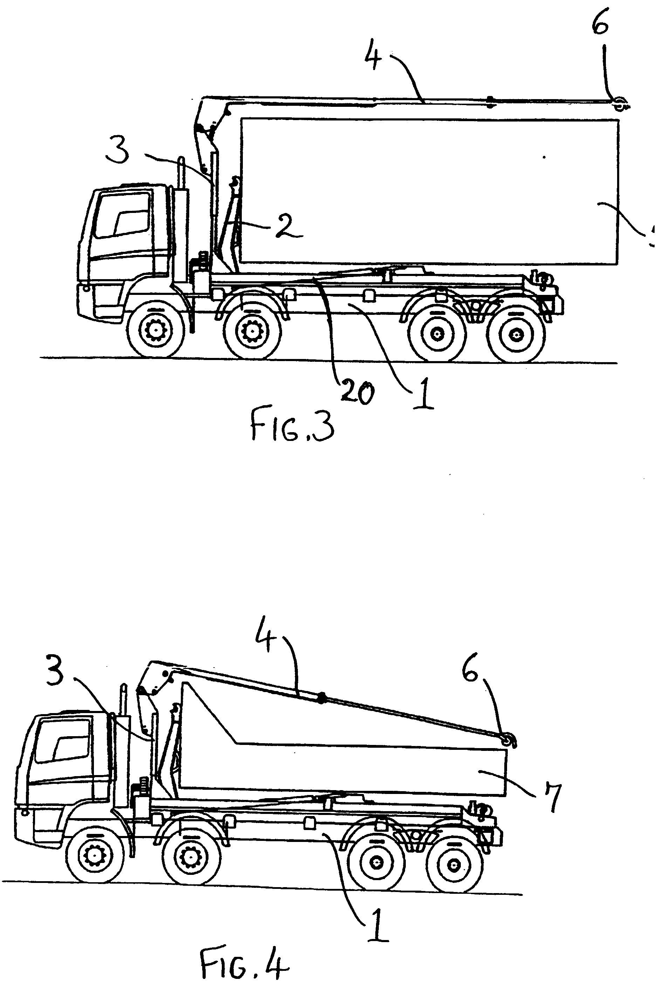

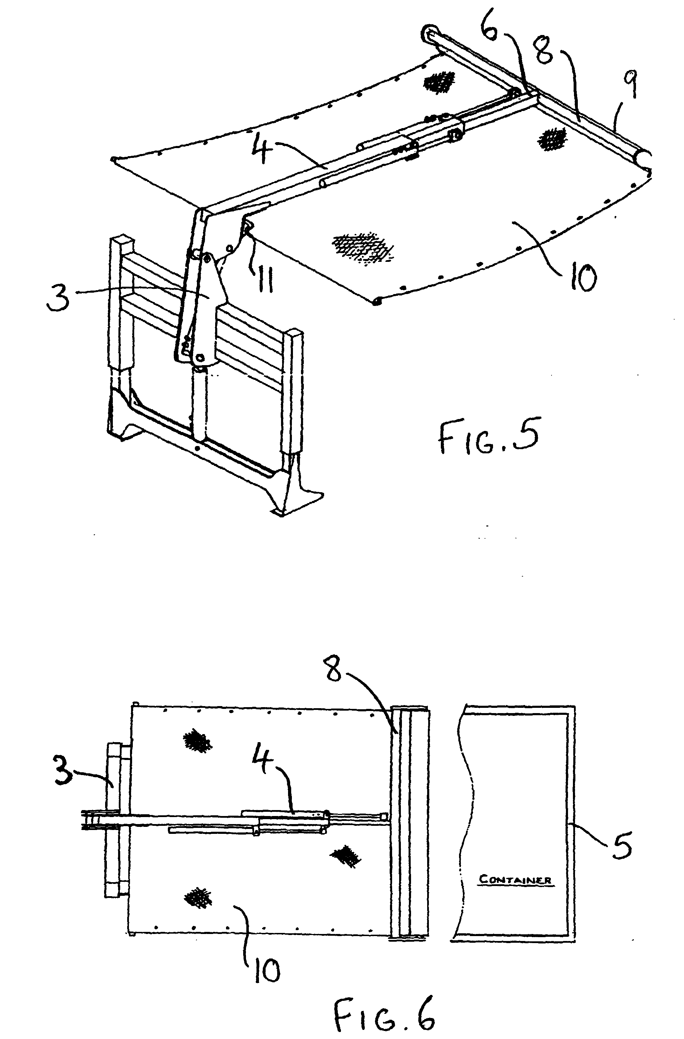

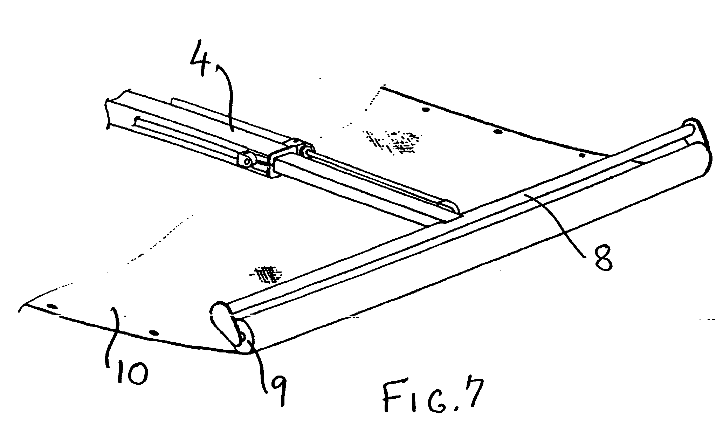

Figure 3 shows a standard container or skip 5 loaded on to the vehicle 1. The telescopic arm 4 has been extended so that the free end 6 of the telescopic arm extends out to the rear of the container 5. A similar situation is illustrated in Figure 4 where the telescopic arm has been extended out (and down) over a low level container 7. As can be seen from Figures 5 to 7 the free end 6 of the telescopic arm 4 has a cover support 8 attached thereto. This support provides a mounting for a roller 9 on which is wound a cover sheet 10. In this arrangement the outer end of the sheet 10 is attached at 11 to the upper end of the gantry 3. As the telescopic arm 4 is extended, the cover 10 is unwound from the roller 9 and thus extends over the top of the container (5 or 7). The cover 10 could be mounted alternatively so that the support 8 and roller 9 are provided at the gantry end 11 and the free end of the cover is fixed to the free end 6 of the arm 4. If desired the cover 10 could be wider at the front of the vehicle than at the rear. This could be of advantage for the type of container shown in Figure 4.

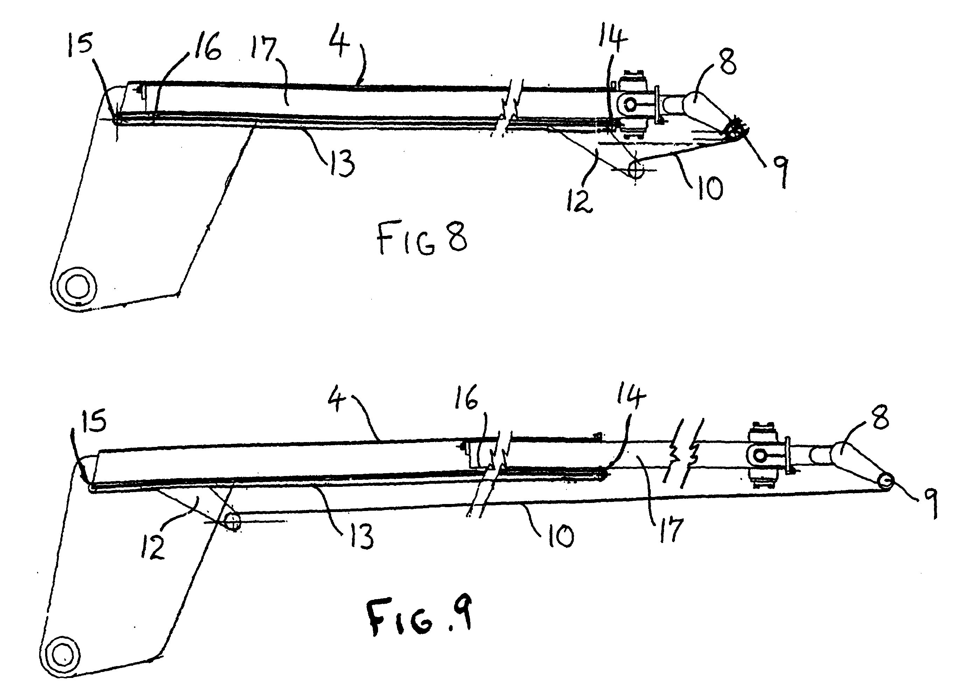

In an alternative arrangement shown in Figures 8 and 9 the cover 10 is essentially fully wound on to the roller 9 when the telescopic arm is in its fully retracted condition. The projecting end of the cover 10 is attached to a mounting arm 12 which is fitted on to a cable 13. This cable is mounted around a pair of rollers 14, 15 in a continuous loop but is anchored at 16 to an intermediate boom 17 of the telescopic arm 4. As the telescopic arm 4 is extended the boom 17 moves forwards and thus pulls on the cable 13 and draws the mounting arm 12 back towards the gantry 3. In the fully extended condition of the telescopic arm 4, as generally indicated in Figure 9, the mounting arm 12 will be located adjacent to the gantry 3. By this means the cover 10 is positioned fully over the top of the container mounted on the vehicle. In a preferred arrangement of this type the support 8 for the roller 9 is connected to the cable and the free end of the cover is fixed to the free end of the arm 4.

An interlock mechanism is provided to ensure that the arm 4 is positioned in such a way that it does not collide with the loading arm 2 when it is being used to load or unload a container, or when a container is being tipped by a ram 20. However if the arm 2 is being used to drag a container behind the vehicle out of a building, for example, then the arm 4 could be lowered to minimise the height of the equipment and the interlocks will ensure that the loading arm 2 and the covering apparatus will not collide with each other.

Whilst these proposals refer to the provision of the covering apparatus on a vehicle, obviously it could be mounted onto a trailer if desired.

## Claims

1. Apparatus for drawing a cover over a container and comprising a gantry supporting a telescopic arm which lies centrally from end to end of the cover in its extended state, a cover support mounted centrally to the free end of the telescopic arm, to the mounting of the telescopic arm to the gantry, or to a movable cable running along the telescopic arm, a cover wound on to a roller and carried by the cover support, and means for enabling the telescopic arm to be extended so that the cover is unwound from the roller.

2. Apparatus according to Claim 1, wherein the telescopic arm is capable of being raised and lowered about a pivot point on to the gantry.

3. Apparatus according to Claim 1 or Claim 2, wherein a free end of the cover is secured to the gantry end of the telescopic arm and the cover support is connected to the free end of the telescopic arm.

4. Apparatus according to Claim 1 or Claim 2, wherein a free end of the cover is interconnected with the free end of the telescopic arm and the cover support is mounted adjacent to the gantry.

5. Apparatus according to Claim 1 or Claim 2, wherein the cover support is attached to movement means which will act to draw the cover support towards the gantry as the free end of the telescopic arm, to which the free end of the cover is attached, is extended to move in a direction away from the gantry.

6. Apparatus according to Claim 1 or Claim 2, wherein a free end of the cover extending from the roller is attached to movement means which will act to draw that end of the cover towards the gantry as the free end of the telescopic arm carrying the cover support is extended to move the cover support in the direction away from the gantry.

7. Apparatus according to Claim 5 or Claim 6, wherein the movement means comprises a mounting arm which is carried by a cable arranged to be drawn around a pulley by part of the telescopic arm, as the telescopic arm is extended.

8. Apparatus for drawing a cover over a container substantially as herein described with reference to the accompanying drawings.

9. Any novel combination of features of apparatus for drawing a cover over a container and substantially as herein described and/or as illustrated in the accompanying drawings.
